# EUROPEAN PATENT SPECIFICATION

(11) **EP 3 694 362 B1**
(45) Date of publication and mention of the grant of the patent: **07.12.2022**
(21) Application number: 18800755.3
(22) Date of filing: 12.10.2018
(51) Int. Cl.: A43B 5/04, A43B 5/16, A43B 23/02, B29D 35/00

(54) **PRODUCTION METHOD OF A COMPONENT OF A SKI BOOT OR THE LIKE AND SKI BOOT PROVIDED WITH SAID COMPONENT**
VERFAHREN ZUR HERSTELLUNG EINER KOMPONENTE EINES SKISCHUHS ODER DERGLEICHEN UND MIT DIESEM BAUTEIL VERSEHENER SKISCHUH
PROCÉDÉ DE PRODUCTION D'UN COMPOSANT D'UNE CHAUSSURE DE SKI OU ANALOGUE, ET CHAUSSURE DE SKI MUNIE DUDIT COMPOSANT

(30) Priority: 12.10.2017 IT 201700115146
(43) Date of publication of application: 19.08.2020
(73) Proprietor: Calzaturificio S.C.A.R.P.A. S.p.A., 31011 Asolo (TV) (IT)
(72) Inventor: PARISOTTO, Davide, 31010 Casella d'Asolo (TV) (IT); MERELLI, Dino, 24020 Onore (BG) (IT)
(74) Representative: Bellemo, Matteo
(86) International application number: PCT/IB2018/057931
(87) International publication number: WO 2019/073449

(56) References cited:
- EP-A1- 2 227 974
- EP-A2- 0 948 911
- WO-A1-2014/136051
- US-A1- 2008 193 774

## Description

### TECHNICAL FIELD

The present invention relates to a production method of a component of a ski boot or the like and to a ski boot provided with said component.

More in detail, the present invention relates to a production method of a composite-material component for a ski mountaineering boot, use to which the following disclosure will make explicit reference without however losing its general character.

### BACKGROUND ART

As already known, the more recent and more sophisticated ski mountaineering boots comprise: a rigid foot-casing made of carbon-fibre composite material, which is substantially shoe-shaped so as to accommodate the foot of the user and whose lower part is specifically structured to be fastened on the back of a downhill ski or the like by means of a special ski mountaineering binding device; a rigid cuff made of carbon-fibre composite material, which is shaped so as to enclose the lower part of the leg of the user from behind, and is hinged to the upper part of the foot-casing so as to be able to swing about a transverse reference axis, which is substantially perpendicular to the vertical midplane of the ski boot, and is also locally substantially coincident with the articulation axis of the ankle; and a protective innerboot with a soft and heat-insulating structure, which is removably inserted inside the foot-casing and the cuff and is shaped so as to contain and protect the foot and leg of the user up to the top of the cuff.

Moreover, the aforesaid ski mountaineering boots additionally include: a manually-operated foot-casing closing mechanism, which is structured so as to be able to selectively close/tighten the foot-casing on the foot of the user to immobilize the foot of the user inside the foot-casing, or rather inside the protective innerboot; and a manually-operated cuff closing mechanism, which is structured so as to be able to selectively close/tighten the upper part of the cuff on the leg of the user to immobilize the leg of the user inside the cuff, or rather inside the protective innerboot.

Finally, the aforesaid ski mountaineering boots are provided with a manually-operated cuff locking device, which is usually arranged in the area above the heel of the ski boot, and is structured so as to selectively and alternatively rigidly lock the cuff to the foot-casing to prevent any swinging movement of the cuff with respect to the foot-casing; or to completely release the cuff from the foot-casing so as to allow the cuff to freely swing with respect to the foot-casing.

Unfortunately, in spite of being much lighter than the traditional ski-mountaineering boots made of thermoplastic material, ski-mountaineering boots with a foot-casing made of composite material are unpopular with some users due to their substantial non-deformability.

The foot-casing made of composite material, in fact, has a very high structural rigidity that prevents the foot-casing from deforming to follow the small movements of the foot of the user, thus making the use of the ski boot less comfortable.

Document WO2014136051 A discloses a production method of a composite material component of a ski boot according to the preamble of the appended claim 1 and a ski boot according to the preamble of the appended claim 12.

### DISCLOSURE OF INVENTION

Aim of the present invention is to provide a foot-casing made of a composite material which can overcome the aforementioned drawbacks and which is also inexpensive to manufacture.

In compliance with these aims, according to the present invention there is provided a production method of a composite-material component for ski boots as defined in claim 1 and preferably, though not necessarily, in any one of the claims dependent upon it.

According to the present invention there is furthermore provided a ski boot as defined in claim 12 and preferably, though not necessarily, in any one of the claims dependent upon it.

### BRIEF DESCRIPTION OF THE DRAWINGS

The present invention will now be described with reference to the accompanying drawings showing an example of non-limiting embodiment, in which:
- Figure 1 is a perspective view of a ski boot made according to the teachings of the present invention, with parts removed for clarity's sake;
- Figure 2 is a rear view of the ski boot shown in Figure 1, with parts removed for clarity's sake;
- Figure 3 is a perspective view of the foot-casing of the ski boot shown in Figure 1, with parts removed for clarity's sake;
- Figure 4 is a perspective view of the cuff of the ski boot shown in Figure 1, with parts removed for clarity's sake;
- Figures 5 to 10 schematically show some steps of the production method of a composite-material component of the ski boot shown in Figure 1;
- Figure 11 is a rear view of a second embodiment of the foot-casing of the ski boot shown in Figure 1, with parts removed for clarity's sake;
- Figure 12 is a perspective view of a second embodiment of the cuff of the ski boot shown in Figure 1, with parts removed for clarity's sake; whereas
- Figure 13 is a perspective view of a mountaineering boot made according to the teachings of the present invention, with parts removed for clarity's sake.

### BEST MODE FOR CARRYING OUT THE INVENTION

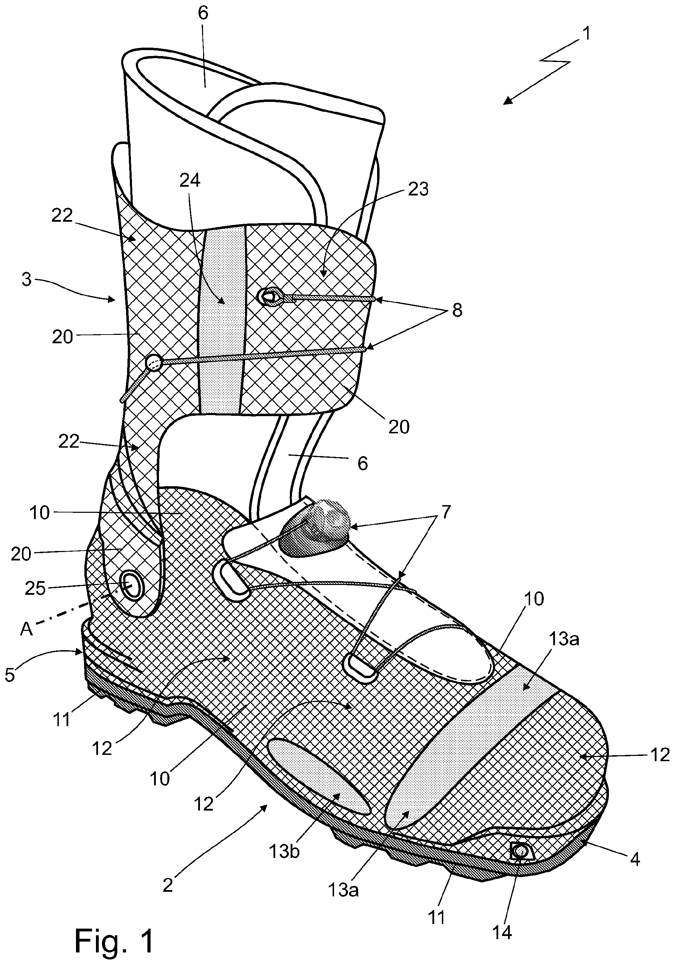

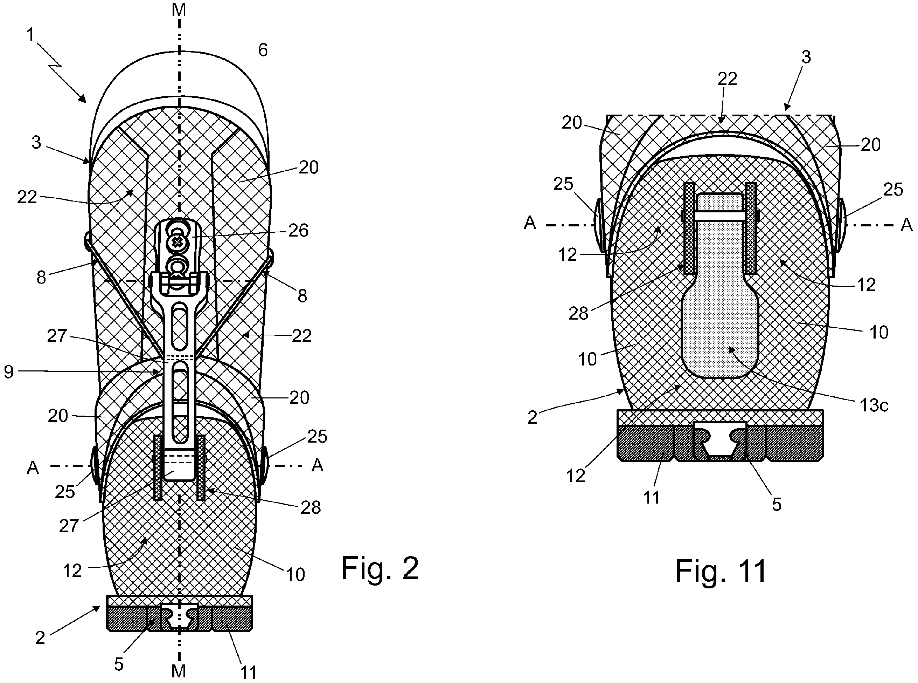

With reference to Figures 1 and 2, number 1 denotes as a whole a ski boot that can be advantageously used to practice ski mountaineering or Telemark.

The ski boot 1 firstly comprises: a substantially rigid foot-casing 2, which is substantially shoe-shaped so as to accommodate the foot of the user, and preferably has the lower part specifically structured to be able to couple/ fasten in a rigid and stable, though easily releasable manner to ski binding device of known type (not shown), which in turn is adapted to be rigidly fixed to the back of a generic downhill ski or the like; and a substantially rigid cuff 3, which is shaped so as to enclose the lower part of the leg of the user, and is pivotally joined to the upper part of the foot-casing 2 so as to be able to freely swing about a transverse rotation axis A, which is locally substantially perpendicular to the vertical midplane M of the ski boot, and is also substantially coincident with the articulation axis of the ankle of the user.

More in detail, the lower part of foot-casing 2 is preferably provided with a front tip 4 and a rear heel 5.

The front tip 4 is preferably structured so as to be coupled/fastened in a stable, though easily releasable manner to the toe-piece (not shown) of a ski binding device that, in turn, is stably fixed to the back of a generic downhill ski or the like.

The rear heel 5, on the other hand, is preferably though not necessarily structured so as to be coupled/fastened in a stable, though easily releasable manner to the heel-piece (not shown) of the ski binding device which, in turn, is stably fixed to the back of a generic downhill ski or the like.

In the shown example, in particular, the front tip 4 of foot-casing 2 is preferably structured so as to be able to be coupled/fasten in a known manner to the toe-piece of a ski mountaineering binding device. The rear heel 5, on the other hand, is preferably structured so as to be able to be coupled/fasten in a known manner to the heel-piece of the ski mountaineering binding device.

Preferably, the lower part of foot-casing 2 furthermore has a treaded profile to grip on snow and/or ice, thus allowing the user to walk on snow and ice in relative safety.

With reference to Figures 1 and 2, the ski boot 1 preferably furthermore comprises an inner liner 6, preferably substantially boot- or shoe-shaped, which is shaped so as to accommodate and protect the foot of the user and optionally also the lower part of the leg of the user, and is fitted inside the foot-casing 2 and optionally also inside the cuff 3, preferably in a manually removable manner.

More in detail, the liner 6 has a thermal-insulating structure and is preferably internally coated with a soft and deformable material, which is able to adapt to the shape of the foot and optionally also to the shape of the leg of the user.

In the shown example, in particular, the liner 6 is preferably substantially boot-shaped so as to accommodate, cover and protect the foot and the lower part of the leg of the user, roughly up to the top of the calf.

Preferably, the liner 6 furthermore has a thermoformable structure.

With reference to Figures 1 and 2, the ski boot 1 is preferably moreover provided with a foot-casing closing mechanism 7 and/or with a cuff closing mechanism 8, both preferably manually operated.

The foot-casing closing mechanism 7 is structured so as to selectively close/tighten the foot-casing 2 on the foot of the user to immobilize the foot of the user inside the foot-casing 2 or rather inside the liner 6.

The cuff closing mechanism 8, on the other hand, is structured so as to selectively close/tighten the upper part of the cuff 3 on the leg of the user to immobilize the leg of the user inside the cuff 3 or rather inside the liner 6.

The foot-casing closing mechanism 7 and the cuff closing mechanism 8 are devices already widely known in the ski boot field, and will therefore not be further described.

With reference to Figure 2, preferably the ski boot 1 is moreover provided with a manually-operated cuff locking device 9 which is structured to selectively and rigidly connect the cuff 3 to the foot-casing 2, so as to prevent the cuff 3 from freely swinging about axis A.

More in detail, the cuff locking device 9 is preferably rigidly fixed to the cuff 3 in the area above the heel of the boot, preferably substantially astride the midplane M of the ski boot.

The cuff locking device 18, moreover, is preferably structured so as to, selectively and alternatively: rigidly fasten the cuff 3 to the foot-casing 2 in a predetermined downhill position in which the cuff 3 is inclined forward with respect to the vertical, at the same time preventing any swinging movement of the cuff 3 on the foot-casing 2 about axis A; and completely unlocking/releasing the cuff 3 from the foot-casing 2 so as to allow the cuff 3 to freely swing back and forth on the foot-casing 2 about axis A, while remaining on the midplane M of the ski boot.

With reference to Figures 1, 2 and 3, the foot-casing 2 in turn comprises: an oblong basin-shaped, rigid shell 10 which is shaped/structured so as to accommodate and enclose the foot of the user, preferably roughly up to the ankle; and preferably also a lower sole 11, preferably with a treaded profile, which is preferably made of vulcanized rubber or other polymeric material with a high friction coefficient, and is firmly fixed to the bottom wall of the rigid shell 10, preferably by gluing.

Furthermore, the rigid shell 10 is made of composite material and is additionally provided with one or more plate-like sectors of elastomeric material, which take up the full thickness of rigid shell 10 and are elastically deformable.

In other words, the rigid shell 10 is a monolithic body divided into at least one composite-material portion or sector and into at least one elastomeric-material portion or sector, which locally take up the full thickness of rigid shell 10 and are joined to one another along the edge and without interruption. The composite-material portion(s) and the elastomeric-material portion(s) are contiguous and complementary to each other.

In the shown example, in particular, the rigid shell 10 is preferably provided with a single composite-material portion 12 of large dimensions, that preferably also includes the bottom wall of rigid shell 10; and with a plurality of small plate-like elastomeric-material portions that locally take up the full thickness of rigid shell 10 and are joined to the composite-material portion 12 along the edge and without interruption.

Preferably, each composite-material portion 12 is formed by one or more superimposed layers of carbon fibres and/or glass fibres and/or aramid fibres (Kevlar) and/or polyester fibres (Vectran), suitably intertwined and/or overlapped and embedded in a solid polymeric matrix. More in detail, the polymeric matrix is preferably an epoxy thermosetting resin.

Alternatively, the solid polymeric matrix may be a phenolic or polyester thermosetting resin.

Each elastomeric-material portion, on the other hand, basically consists of a layer of vulcanized rubber or other similar elastomeric material, joined along the edge and without interruption to the adjacent composite-material portion(s) 12.

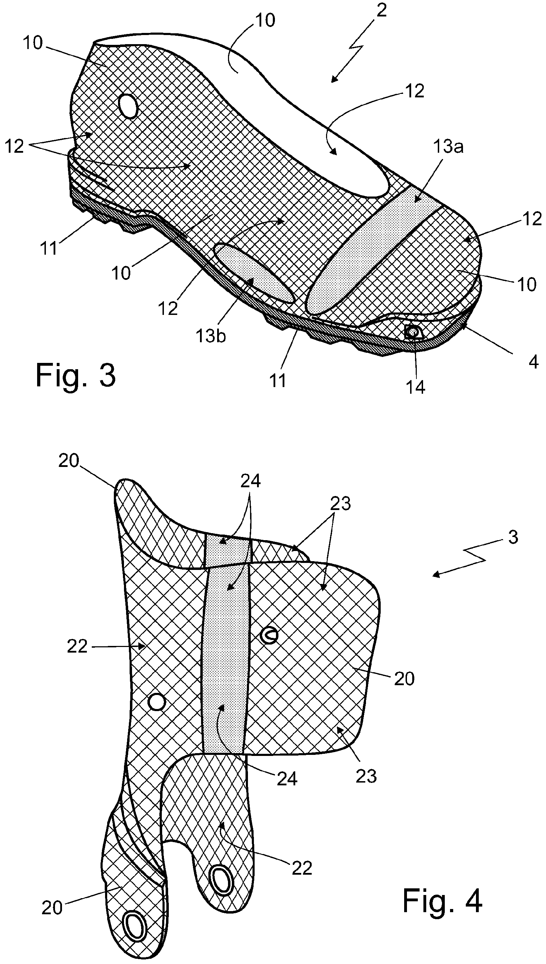

More in detail, with reference to Figures 1 and 3, the rigid shell 10 is preferably provided with a first elastomeric-material portion 13a, having an oblong and arched shape, which extends on the front upper portion of rigid shell 10 and for the full thickness of rigid shell 10, substantially from the outer side to the inner side of rigid shell 10 transversely to the midplane M of the ski boot, and is substantially vertically aligned with the border between the metatarsal zone and the phalangeal area of the foot of the user.

Preferably, the elastomeric-material portion 13a moreover extends on the front upper portion of rigid shell 10 substantially perpendicular to the midplane M.

The elastomeric-material portion 13a allows the front part of rigid shell 10 to bend elastically so as to follow the movement of the user's forefoot during a free-heel walking or skiing.

In the shown example, moreover, the rigid shell 10 is preferably, though not necessarily, provided with two further oblong-shaped elastomeric-material portions 13b that are arranged, respectively, on the outer side and on the inner side of rigid shell 10, substantially on opposite sides of the metatarsal zone of the foot of the user and, preferably, also close to the bottom wall of rigid shell 10.

The two elastomeric-material portions 13b take up the full thickness of rigid shell 10 and allow the front part of the rigid shell 10 to adapt in real time to the shape of the forefoot of the user.

With reference to Figures 1 and 3, the foot-casing 2 moreover comprises a rigid front insert 14, preferably having a substantially plate-like structure, which is preferably made of metal material and is firmly embedded/ incorporated in the bottom wall of rigid shell 10, roughly at the tip 4 of foot-casing 2.

More in detail, the rigid front insert 14 is preferably embedded/incorporated in the sector of the composite-material portion 12 forming the bottom wall of the rigid shell 10.

Preferably, the rigid front insert 14 is furthermore dimensioned so as to surface/emerge outside the rigid shell 10 on opposite sides of front tip 4 of foot-casing 2, roughly in a specular position with respect to the midplane M of the ski boot, so that the two distal ends of the rigid insert 14 can be coupled in known manner to the toe-piece of the ski mountaineering or Telemark binding device.

With reference to Figures 1, 2 and 4, on the other hand, the cuff 3 basically comprises a substantially T-shaped, rigid shell 20 which is centrally C-shaped so as to cover the rear part of the leg of the user, roughly from the ankle to the top of the calf, and is provided with two oblong lateral flaps extending forward on opposite sides of the midplane M of the ski boot so as to embrace from behind the leg of the user roughly at the height of the calf. Preferably, the two oblong lateral flaps are also adapted to overlap each other at the front of the leg, forming a tubular structure that surrounds the leg of the user at the calf.

Likewise to rigid shell 10, rigid shell 20 is preferably made of a composite material and is further provided with one or more plate-like sectors of elastomeric material, which take up the full thickness of rigid shell 20 and are elastically deformable.

In other words, the rigid shell 20 is a monolithic body divided into at least one composite-material portion or sector and into at least one elastomeric-material portion or sector, which take up the full thickness of rigid shell 20 and are joined to one another along the edge and without interruption. The composite-material portion(s) and the elastomeric-material portion(s) are contiguous and complementary to each other.

More specifically, the rigid shell 20 is preferably provided with a large oblong-shaped composite-material portion 22, which forms the central body of the rigid shell 20 and is directly hinged to the foot-casing 2; with two small oblong-shaped composite-material portions 23 that form the ends of the two oblong lateral flaps of rigid shell 20; and finally with two elastomeric-material portions 24 that are located at junction of the two lateral flaps with the central body of rigid shell 20, so as to be interposed between the large composite-material portion 22 and the two small composite-material portions 23.

Each elastomeric-material portion 24 is joined, along the edge and without interruption, both to the central composite-material portion 22 and to the adjacent lateral composite-material portion 23, so as to allow the two oblong lateral flaps of rigid shell 20 to freely bend in elastic manner.

Preferably, the composite-material portions 22 and 23 are furthermore formed by one or more superimposed layers of carbon fibres and/or glass fibres and/or aramid fibres (Kevlar) and/or polyester fibres (Vectran), suitably intertwined and/or overlapped to one another and embedded in a solid polymeric matrix. More in detail, the polymeric matrix is preferably an epoxy thermosetting resin.

Alternatively, the solid polymeric matrix may be a phenolic or polyester thermosetting resin.

Each elastomeric-material portion 24, on the other hand, preferably basically consists of a sheet of vulcanized rubber or other similar elastomeric material, which is joined, along the edge and without interruption, to the adjacent composite-material portion(s) 22 and 24.

With reference to Figures 1 and 2, finally the cuff 3, or rather the rigid shell 20, is preferably fixed in freely rotatable manner to the upper part of foot-casing 2, or rather of rigid shell 10, by means of two connection hinges 25 preferably made of metal material, which are arranged on the inner and outer sides of foot-casing 2 and of cuff 3, aligned along transverse axis A, so as to allow the cuff 3 to freely swing back and forth on the foot-casing 2, always remaining on a reference plane orthogonal to axis A and substantially coinciding with the midplane M of the ski boot.

On the other hand, the cuff locking device 9 is preferably structured so as to be able to lock the cuff 3 in rigid manner to the foot-casing 2 in a predetermined downhill position in which the cuff 3 is inclined forward with respect to the vertical by an angle preferably, though not necessarily, ranging from 3° to 30°.

More in detail, with reference to Figure 2, in the example shown the cuff locking device 9 preferably comprises: a support plate 26, which is preferably made of metal material and is rigidly fixed to the cuff 3, or rather to rigid shell 20, above the heel of ski boot 1 and preferably substantially across the midplane M of the ski boot; and a rigid and oblong movable arm 27 which is preferably made of metal material and is butt hinged to the support plate 26 to freely rotate with respect to the plate 26 while remaining substantially on the midplane M of the ski boot, to and from a locking position (see Figure 2) in which the movable arm 27 extends downwards, preferably remaining substantially skimmed over to the outer surface of the cuff 3, and hooks its distal end in a firmly, though removable manner to an anchoring structure 28, which is rigidly fixed to the foot-casing 2, or rather to the rigid shell 10, spaced underneath the cuff locking device 9, more or less at the heel of ski boot 1.

Preferably, the cuff locking device 9 additionally comprises an elastic member (not shown) which is preferably interposed between the support plate 26 and the movable arm 27, and elastically brings and maintains the arm 27 in its locking position.

General operation of ski boot 1 is easily inferable from the above description and does not require any further explanation.

As regard to foot-casing 2 and cuff 3 of ski boot 1, the rigid shell 10 of foot-casing 2 and the rigid shell 20 of cuff 3 are realized with the following production method of a composite-material piece, that allows making a monolithic body with a shell structure which is provided with at least one composite-material portion and with at least one elastically-deformable elastomeric-material portion, contiguous and complementary to each other. The composite-material portion(s) and the elastomeric-material portion (s) moreover take up the full thickness of the monolithic body with a shell structure, and are joined to one another along the edge and without interruption.

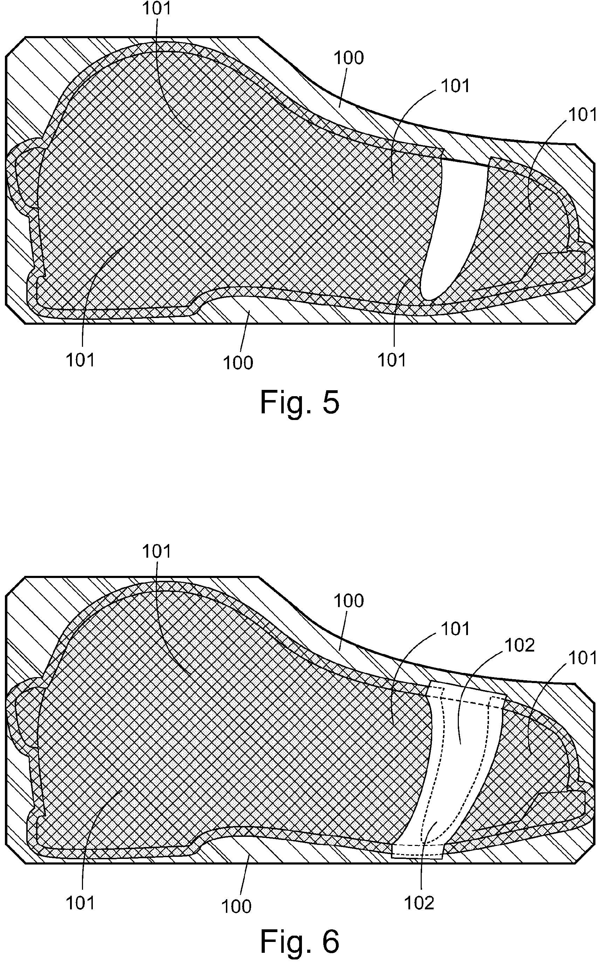

More in detail, assuming to manufacture a rigid shell 10 with only the elastomeric-material portion 13a and to already have a mould 100 with a cavity that copies in negative the shape of the rigid shell 10 to be made, with reference to Figure 5 the production method of rigid shell 10 firstly provides for placing/laying on the inner surface of mould 100 at least one sheet of pre-impregnated fabric 101, i.e. a sheet formed by one or more tissue pieces embedded in the preferably thermosetting, semi-fluid resin, while leaving uncovered the area of the mould 100 corresponding to the elastomeric-material portion 13a to be made.

More in detail, in the example shown, the sheet of pre-impregnated fabric 101 has a thickness preferably ranging from 1 mm to 5 mm (millimetres), and is preferably formed by one or more pieces of synthetic fabric suitably intertwined and/or overlapped to one another and embedded in a preferably epoxy thermosetting resin.

Preferably, the piece(s) of synthetic fabric are furthermore made of carbon fibre and/or glass fibre and/or Kevlar or other aramid fibres and/or Vectran or other polyester fibres.

Alternatively, the thermosetting resin may also be a phenolic or polyester resin.

Even more in detail, in the example shown, the sheet of pre-impregnated fabric 101 is preferably formed by one or more pieces of high-strength carbon fibre fabric, embedded in an epoxy thermosetting resin having a polymerization/ reticulation temperature preferably ranging from 100°C to 140°C.

With reference to Figure 6, after having placed the pre-impregnated fabric sheet 101 in the cavity of mould 100, the production method of the rigid shell 10 provides for placing/laying an elastomeric thermoplastic material film 102 on the inner surface of mould 100, in the area corresponding to the elastomeric-material portion 13a to be made, preferably at least partially overlapping the edge of the elastomeric thermoplastic material film 102 to the edge of the sheet of pre-impregnated fabric 101.

In other words, the elastomeric thermoplastic material film 102 occupies an area slightly higher than the area of the mould 100 corresponding to the elastomeric-material portion 13a to be made.

In the shown example, in particular, the elastomeric thermoplastic material film 102 has a thickness preferably smaller than 0.8 mm (millimetres) and is preferably made of a thermoplastic polyurethane polymer (TPU).

More in detail, the elastomeric thermoplastic material film 102 is preferably made of an ether-based thermoplastic polyurethane resin.

Alternatively, the elastomeric thermoplastic material film 102 could also be made of an ester-based thermoplastic polyurethane resin.

Preferably, the elastomeric thermoplastic material film 102 moreover has a melting/softening temperature close to the polymerization/reticulation temperature of the thermosetting resin of the sheet of pre-impregnated fabric 101.

More in detail, the elastomeric thermoplastic material film 102 has a melting/softening temperature preferably ranging from 120°C to 160°C.

Even more in detail, in the example shown, the elastomeric thermoplastic material film 102 is preferably a film marketed by the company FAIT PLAST SPA of Cellatica (BS) under the name "FAITGOM E/4 crystral".

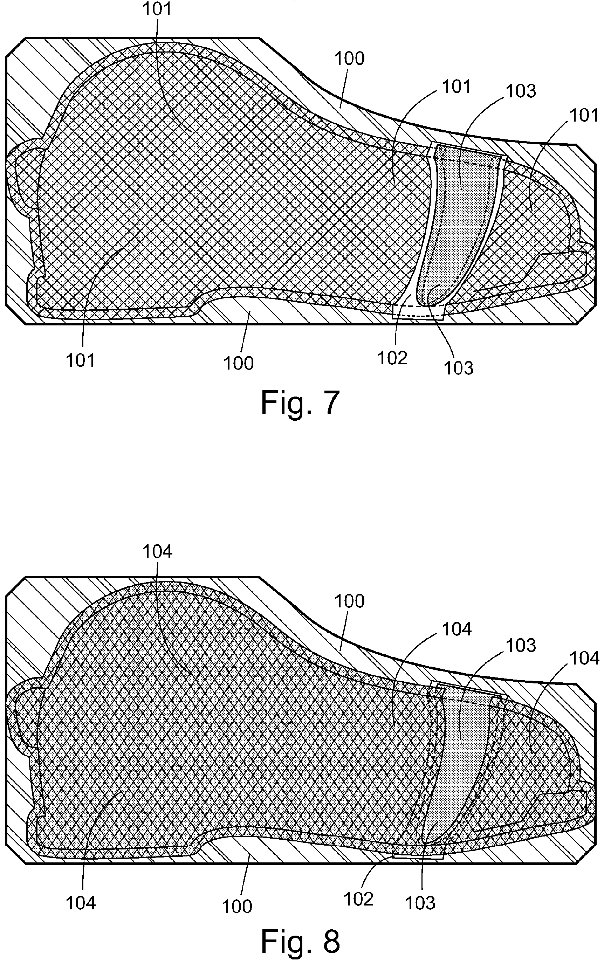

With reference to Figure 7, after having placed the elastomeric thermoplastic material film 102 in the cavity of mould 100, the production method of rigid shell 10 provides for placing/laying a sheet of non-vulcanized rubber 103 over the elastomeric thermoplastic material film 102, in the area corresponding to the elastomeric-material portion 13a to be made.

Preferably, the sheet of non-vulcanized rubber 103 is furthermore shaped to remain within the perimeter of the elastomeric thermoplastic material film 102.

In other words, the sheet of non-vulcanized rubber 103 does not protrude outside the perimeter of the elastomeric thermoplastic material film 102.

In the shown example, in particular, the sheet of non-vulcanized rubber 103 has a thickness preferably ranging from 1 to 5 mm (millimetres), and is preferably made of a non-reticulated synthetic rubber with a vulcanization temperature preferably ranging from 120°C to 160°C. I.e. with a vulcanization temperature substantially equal to the polymerization/reticulation temperature of the thermosetting resin of the sheet of pre-impregnated fabric 101.

More in detail, the sheet of non-vulcanized rubber 103 is preferably made of EPDM rubber and has a vulcanization temperature preferably equal to about 140°C.

Even more in detail, in the example shown, the sheet of non-vulcanized rubber 103 is preferably made of synthetic rubber marketed by the company GUMMIWERK KRAIBURG GMBH & Co. KG of Waldkraiburg under the name "KRAIBON".

With reference to Figure 8, after having placed the sheet of non-vulcanized rubber 103 in the cavity of mould 100, the production method of rigid shell 10 preferably, though not necessarily provides for placing/laying above the sheet of pre-impregnated fabric 101 a second sheet of pre-impregnated fabric 104, i.e. a sheet formed by one or more pieces of tissue embedded in the thermosetting semi-fluid resin, while leaving uncovered the area of mould 100 corresponding to the elastomeric-material portion 13a to be made. Preferably, the edge of the second sheet of pre-impregnated fabric 104 is moreover at least partially overlapped to the edge of the sheet of non-vulcanized rubber 103.

Also in this case, the sheet of pre-impregnated fabric 104 has a thickness preferably ranging from 1 to 5 mm (millimetres) and is preferably formed by one or more pieces of synthetic fabric suitably overlapped to one another and embedded in a preferably epoxy thermosetting resin. Preferably, the pieces of synthetic fabric are also made of carbon fibre and/or glass fibre and/or Kevlar or other aramid fibres and/or Vectran or other polyester fibres.

More in detail, in the example shown, the sheet of pre-impregnated fabric 104 is preferably made of the same material as the sheet of pre-impregnated fabric 101.

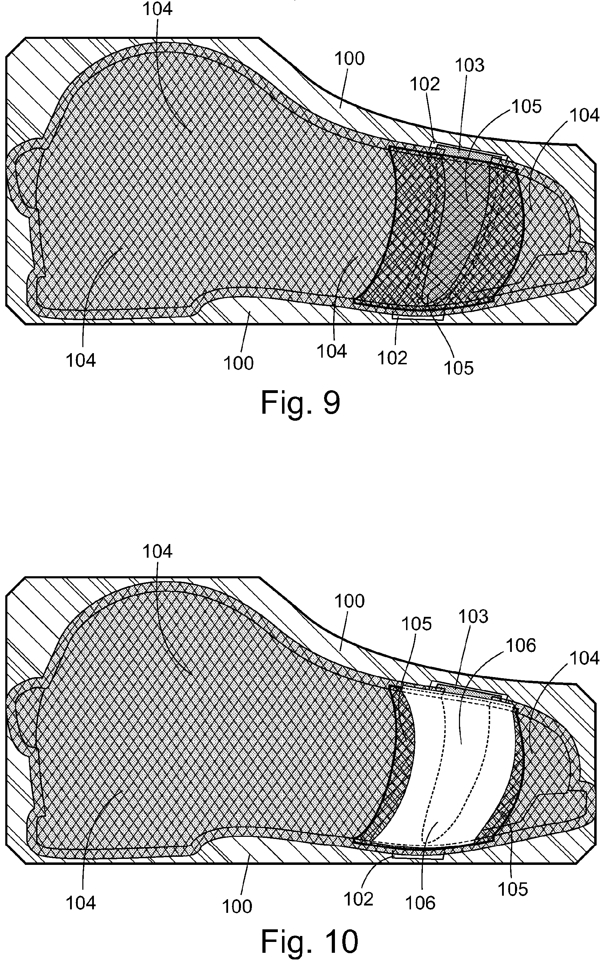

With reference to Figure 9, after having placed the sheet of non-vulcanized rubber 103 or, if provided, the sheet of pre-impregnated tissue 104 in the cavity of mould 100, the production method of rigid shell 10 preferably, though not necessarily, provides for placing/laying, over the whole sheet of non-vulcanized rubber 103 and the sheet of pre-impregnated fabric 101 and, if present, even over the sheet of pre-impregnated fabric 104, at least one piece of reinforcing synthetic fabric 105 with high strength yarns.

More in detail, in the example shown, the piece of synthetic fabric 105 is preferably made of Kevlar or other aramid fibre. Alternatively, the piece of synthetic fabric 105 could also be made of polyester fibres such as, for example, the mono-oriented polyarylated polyester (commercially known as VECTRAN).

With reference to Figure 10, after having placed the sheet of non-vulcanized rubber 103 and, if provided, the sheet of pre-impregnated fabric 104 and/or the piece of synthetic fabric 105 in the cavity of mould 100, the production method of rigid shell 10 provides for placing/ laying a second elastomeric thermoplastic material film 106 over the piece of synthetic fabric 105 or the sheet of pre-impregnated fabric 104 and, in any case, over the sheet of non-vulcanized rubber 103, thus to completely cover the area of the mould corresponding to the elastomeric-material portion 13a to be made, preferably while at least partially overlapping the edge of the elastomeric thermoplastic material film 106 to the edge of the sheet of pre-impregnated fabric 101 or 104 and/or the edge of the elastomeric thermoplastic material film 102.

In other words, the sheet of non-vulcanized rubber 103 is enclosed between the elastomeric thermoplastic material film 102 and the elastomeric thermoplastic material film 106, optionally together with the edge of the second sheet of pre-impregnated fabric 104 and/or the piece of synthetic fabric 105.

In the example shown, in particular, the elastomeric thermoplastic material film 106 has a thickness preferably smaller than 0.8 mm (millimetres), and is preferably made of the same material as the elastomeric thermoplastic material film 102.

Finally, after having placed the elastomeric thermoplastic material film 106 in the cavity of mould 100, the production method of rigid shell 10 provides for extracting the air from the mould 100 and then subjecting the mould 100 and all of its contents to a thermal baking cycle that causes, at the same time, the vulcanization of the sheet of non-vulcanized rubber 103 and the polymerization/reticulation and hardening of the resin of the sheet of pre-impregnated fabric 101 and, if present, of the sheet of pre-impregnated fabric 104.

More in detail, the production method of rigid shell 10 preferably provides for placing the mould 100 and all of its contents inside an autoclave oven (not shown) of known type, and subjecting the mould 100 and all of its contents to a thermal baking cycle that provides for bringing and maintaining the mould 100 and its contents at a temperature preferably higher than 110°C for a predetermined time interval, and which is enough to cause and complete the vulcanization of the sheet of non-vulcanized rubber 103, the adhesion of the thermoplastic elastomeric material films 102 and 106 to the sheet of non-vulcanized rubber 103, and the complete hardening of the thermosetting resin of the sheet of pre-impregnated fabric 101 and, if present, of the sheet of pre-impregnated fabric 104.

In the shown example, in particular, the thermal baking cycle preferably involves bringing the mould 100 and all of its contents to a temperature ranging from 120°C to 140°C, for a time interval preferably ranging from 5 to 30 minutes.

At the end of the thermal baking cycle, a monolithic rigid shell is formed inside the mould 100, said shell having the shape of the rigid shell 10 and being provided with a part of rigid composite material and a part of flexible, elastomeric material, contiguous and complementary to each other.

Obviously, the part made of rigid composite material corresponds to the composite-material portion 12, whereas the part made of elastomeric material corresponds to the elastomeric-material portion 13a of the rigid shell 10.

Finally, at the end of the thermal baking cycle, the production method of rigid shell 10 provides for the extraction of the resulting rigid shell 10 from mould 100.

Clearly, the aforesaid production method can also be used to produce the rigid shell 20 of cuff 3.

Obviously, in this case, the used mould will have a cavity that copies in negative the shape of the rigid shell 20 to be made, and the sheet of pre-impregnated fabric 101, the elastomeric thermoplastic material film 102, the sheet of non-vulcanized rubber 103, the elastomeric thermoplastic material film 106 and, if provided, the second sheet of pre-impregnated fabric 104 and/or the piece of reinforcing synthetic fabric 105 are arranged inside the cavity of the mould so as to realize the whole rigid shell 20.

The advantages deriving from the particular structure of foot-casing 2 and of cuff 3 are remarkable.

First, although the rigid shell 10 is a monolithic body predominantly made of composite material, the elastomeric-material portion 13a allows the rigid shell 10 to elastically bend near the tip of the ski boot, so as to follow the movement of the forefoot of the user during a free-heel walking or skiing.

The portions made of elastomeric material 13b, on the other hand, allow the rigid shell 10 to deform/expand transversally, thus adapting the shape of rigid shell 10 to the shape of the foot of the user, with all the advantages that this entails.

The presence of the elastomeric-material portions 24 on the rigid shell 20 of cuff 3, on the other hand, allows the two oblong lateral flaps to elastically bend much more widely than if they were entirely made of composite material. In this way, the upper part of cuff 3 may adapt more precisely to the shape of the calf of the leg of the user, with all the advantages in fitting comfort that this entails.

Finally, it is clear that modifications and variations can be made to the aforesaid ski boot 1 and to the production method thereof without departing from the scope of the present invention.

For example, in a first not-shown embodiment, while the rigid shell 10 of foot-casing 2 is made of composite material, the rigid shell 20 of cuff 3 can be made of thermoplastic material, preferably via injection moulding.

In a second not-shown embodiment, moreover, while the rigid shell 20 of cuff 3 is made of composite material, the rigid shell 10 of foot-casing 2 can be made of thermoplastic material, preferably via injection moulding.

With reference to Figure 11, in addition to or in place of the elastomeric-material portion 13a and/or the elastomeric-material portions 13b, the rigid shell 10 of foot-casing 2 can include a third, preferably oblong-shaped, elastomeric-material portion 13c which is arranged on the rear part of rigid shell 10 at the heel of the foot of the user. The elastomeric-material portion 13c allows the rear part of rigid shell 10 to adapt itself to the shape and/or position of the heel of the foot of the user.

Obviously, the elastomeric-material portion 13c can be made on rigid shell 10 via the production method described above, together with or as an alternative to the elastomeric-material portions 13a and/or 13b.

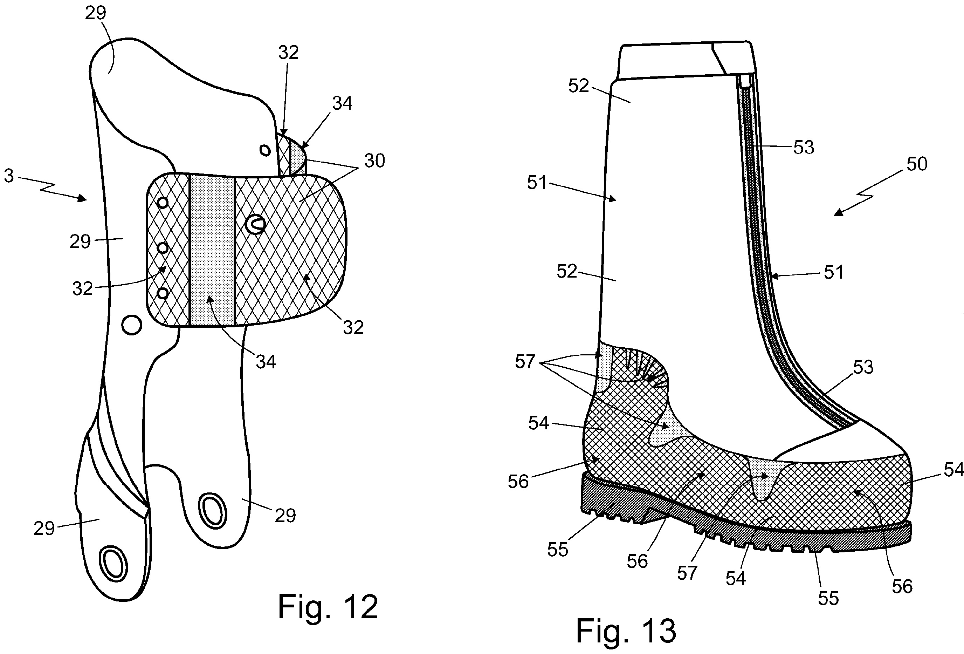

Finally, with reference to Figure 12, in a different embodiment, the cuff 3 preferably comprises: a large, oblong-shaped, central plate-like element 29 which is C-bent so as to cover the rear part of the leg of the user, roughly from the ankle to the top of the calf, and is directly pivotally joined to the foot-casing 2; and two lateral plate-like elements 30 that are discrete and separated from the central plate-like member 29 and are firmly fixed to the central plate-like member 29, on opposite sides thereof and of the midplane M of the ski boot, so as to project in a cantilever manner from the central plate-like member 29 and embrace the leg of the user from behind roughly at the height of the calf, preferably while overlapping to one another at the front of the leg so as to form a tubular structure surrounding the leg of the user at the height of the calf.

The central plate-like element 29 is preferably made of thermoplastic material, preferably via injection moulding.

Each lateral plate-like element 30, on the other hand, is made of composite material, and is provided with at least one plate-like sector made of elastically-deformable elastomeric material that takes up the full thickness of the same lateral plate-like element 30.

In other words, each lateral plate-like element 30 consists of a monolithic body with a shell structure, which is longitudinally divided into at least two lateral composite-material portions or sectors 32, and one elastomeric-material central portion or sector 34.

The lateral composite-material portions 32 and the elastomeric-material central portion 34 take up the full thickness of the lateral plate-like element 30, and are joined to one another along the edge and without interruption.

Preferably, each lateral composite-material portion 32 is formed by one or more superimposed layers of carbon fibres and/or glass fibres and/or aramid fibres (Kevlar) and/or polyester fibres (Vectran), suitably intertwined and/or overlapped to one another and embedded in a solid polymeric matrix. More in detail, the polymeric matrix is preferably an epoxy thermosetting resin.

Alternatively, the solid polymeric matrix may be a phenolic or polyester thermosetting resin.

The central elastomeric-material portion 34, on the other hand, basically consists of a sheet of vulcanized rubber or other similar elastomeric material, joined along the edge and without interruption to the two lateral composite-material portions 32.

In this embodiment, the rigid shell 10 of the foot-casing 2 can be made of a composite material, preferably via the method described above, or it can be made of thermoplastic material preferably via injection moulding.

Clearly, the production method described above can also be used to make one or both of the lateral plate-like elements 30 of cuff 3.

In this case, obviously, the used mould will have a cavity that copies in negative the shape of the entire lateral plate-like element 30 to be made, and the sheet of pre-impregnated fabric 101, the elastomeric thermoplastic material film 102, the sheet of non-vulcanized rubber 103, the second elastomeric thermoplastic material film 106 and, if provided, the second sheet of pre-impregnated fabric 104 and/or the piece of reinforcing synthetic fabric 105, are arranged within the mould cavity so as to make the whole lateral plate-like element 30.

Finally, with reference to Figure 13, the production method described above can be advantageously used also for realizing the composite-material foot-casing of a mountaineering boot 50.

More specifically, mountaineering boot 50 preferably comprises: a substantially boot-shaped upper 51, which has a soft and thermal-insulating structure and is preferably externally covered by a substantially tubular-shaped, protective gaiter 52 which is made of a waterproof material and is preferably closed by a watertight zipper 53; a substantially oblong basin-shaped rigid shell 54 which is shaped/structured so as to enclose/contain the part of the upper 51 accommodating the foot of the user, preferably roughly up to the ankle; and a sole 55 preferably having a treaded profile and which is made of vulcanized rubber or other polymeric material having a high friction coefficient and is firmly secured to the bottom wall of rigid shell 54 preferably by gluing.

Likewise rigid shell 10, also rigid shell 54 is made of composite material and is furthermore provided with at least one and preferably a plurality of plate-like sectors of elastomeric material, which take up the full thickness of rigid shell 54 and are elastically deformable.

In other words, the rigid shell 54 is a monolithic body divided into at least one composite-material portion or segment 56 and into one or more elastomeric-material portions or sectors 57, that locally take up the full thickness of rigid shell 54 and are joined to one another along the edge and without interruption. The composite-material portion(s) 56 and the elastomeric-material portion(s) 57 are contiguous and complementary to each other.

Obviously, the mould used to manufacture the rigid shell 54 has a cavity that copies in negative the shape of the whole rigid shell 54 to be made, and the sheet of pre-impregnated fabric 101, the elastomeric thermoplastic material film 102, the sheet of non-vulcanized rubber 103, the second elastomeric thermoplastic material film 106 and, if provided, the second sheet of pre-impregnated fabric 104 and/or the piece of reinforcing synthetic fabric 105 are arranged within the mould cavity so as to realize the whole rigid shell 54.

## Claims

1. Production method of a composite-material component (10, 20, 30, 54) of a ski boot (1) or the like (50); said component being a monolithic body with a shell structure (10, 20, 30, 54), that has at least one composite-material portion (12, 22, 32, 56) and at least one elastomeric-material portion (13a, 13b, 13c, 24, 34, 57) adjacent to one another; said at least one composite-material portion (12, 22, 32, 56) and said at least one elastomeric-material portion (13a, 13b, 13c, 24, 34, 57) extending for the full thickness of the monolithic body with a shell structure (10, 20, 30, 54), and being joined to one another along the edge and without interruption:
said production method being **characterised by** comprising the steps of:
- placing/laying at least a first sheet of pre-impregnated fabric (101) onto the surface of a mould (100) that copies in negative the shape of the monolithic body with a shell structure (10, 20, 30, 54) to be made, while leaving uncovered the area of the mould (100) corresponding to the elastomeric-material portion (13a, 13b, 13c, 24, 34) to be made;
- placing/laying a first elastomeric thermoplastic material film (102) on the surface of the mould (100), in the area of the mould (100) corresponding to the elastomeric-material portion (13a, 13b, 13c, 24, 34,) to be made, at least partially overlapping the edge of said first elastomeric thermoplastic material film (102) and said first sheet of pre-impregnated fabric (101);
- placing/laying a sheet of non-vulcanized rubber (103) over said first elastomeric thermoplastic material film (102), in the area of the mould (100) corresponding to the elastomeric-material portion (13a, 13b, 13c, 24, 34) to be made;
- placing/laying a second elastomeric thermoplastic material film (106) over said sheet of non-vulcanized rubber (103), at least partially overlapping the edge of said second elastomeric thermoplastic material film (106) and said first sheet of pre-impregnated fabric (101) and/or said first thermoplastic elastomer material film (102); and finally
- extracting the air from the mould (100) and then subjecting the mould (100) and all its contents to a thermal baking cycle, which simultaneously causes the vulcanization of the sheet of non-vulcanized rubber (103) and the polymerization/reticulation and hardening of the thermosetting resin of said first sheet of pre-impregnated fabric (101).

2. Production method of a composite-material component according to Claim 1, **characterised in that** said sheet of non-vulcanized rubber (103) is shaped so as to remain within the perimeter of said first thermoplastic elastomer material film (102).

3. Production method of a composite-material component according to Claim 1 or 2, **characterised in that** it further comprises the step of placing/laying, over said first sheet of pre-impregnated fabric (101) and under said second elastomeric thermoplastic material film (106), a second sheet of pre-impregnated fabric (104), while leaving uncovered the area of the mould (100) corresponding to the elastomeric-material portion (13a, 13b, 13c, 24, 34) to be made.

4. Production method of a composite-material component according to claim 3, **characterised in that** the edge of said second sheet of pre-impregnated fabric (104) at least partially overlaps the edge of said sheet of non-vulcanized rubber (103).

5. Production method of a composite-material component according to any one of the preceding claims, **characterised in that** it further comprises the step of placing/laying, over said first sheet of pre-impregnated fabric (101) and under said second elastomeric thermoplastic material film (106), at least a piece of reinforcing synthetic fabric (105) which also extends over the sheet of non-vulcanized rubber (103).

6. Production method of a composite-material component according to claim 5, **characterised in that** said piece of reinforcing synthetic fabric (105) is made of aramid fibres and/or polyester fibres.

7. Production method of a composite-material component according to any one of the preceding claims, **characterised in that** said first sheet of pre-impregnated fabric (101) is made of one or more pieces of synthetic fabric suitably overlapped to one another and embedded in a preferably epoxy thermosetting resin.

8. Production method of a composite-material component according to any one of the preceding claims, **characterised in that** said first (102) and/or said second (106) elastomeric thermoplastic material film is/are made of a thermoplastic polyurethane polymer (TPU).

9. Production method of a composite-material component according to claim 8, **characterised in that** said thermoplastic polyurethane polymer (TPU) is an ether-based thermoplastic polyurethane resin.

10. Production method of a composite-material component according to any one of the preceding claims, **characterised in that** said sheet of non-vulcanized rubber (103) is made of a non-reticulated synthetic rubber having a vulcanization temperature substantially equal to the polymerization/reticulation temperature of the thermosetting resin of said first sheet of pre-impregnated fabric (101); preferably the thickness of said sheet of non-vulcanized rubber (103) ranging from 1 to 5 mm.

11. Production method of a composite-material component according to Claim 10, **characterised in that** said sheet of non-vulcanized rubber (103) is made of EPDM rubber.

12. Ski boot (1) comprising: a substantially rigid foot-casing (2) which is substantially shoe-shaped so as to accommodate the foot of the user; and a substantially rigid cuff (3) which is shaped so as to enclose the lower part of the leg of the user, and is pivotally joined to the foot-casing (2) so as to be able to swing about a rotation axis (A) substantially perpendicular to the midplane of the ski boot (M);
the ski boot (1) being **characterised in that** the foot-casing (2) and/or the cuff (3) comprise/comprises at least one composite-material component (10, 20, 30) made according to the production method of any one of Claims 1 to 11.

13. Ski boot according to claim 12, **characterised in that** the foot-casing (2) comprises a first, substantially oblong basin-shaped, rigid shell (10) which is shaped/structured so as to accommodate and enclose the foot of the user; said first rigid shell (10) being the composite-material component made according to the production method of any one of Claims 1 to 11.

14. Ski boot according to claim 12 or 13, **characterised in that** the cuff (3) comprises a second, substantially T-shaped, rigid shell (20) which is centrally C-bent so as to cover the rear part of the leg of the user, roughly from the ankle up to the top of the calf, and is additionally provided with two oblong lateral flaps extending forward on opposite sides of the midplane of the ski boot (M), so as to embrace the leg of the user from behind roughly at the height of the calf; said second rigid shell (20) being the composite-material component made according to the production method of any one of Claims 1 to 11.

15. Ski boot according to claim 12 or 13, **characterised in that** the cuff (3) comprises: a large oblong-shaped central plate-like member (29) which is centrally C-bent so as to cover the rear part of the leg of the user, roughly from the ankle up to the top of the calf, and is directly pivotally joined to the foot-casing (2); and two lateral plate-like members (30) which are discrete and separated from the central plate-like member (29) and are stably fixed to said central plate-like member (29) on opposite sides thereof and of the midplane of the ski boot (M), so as to project in cantilever manner from the central plate-like member (29) and embrace the leg of the user from behind roughly at the height of the calf; said lateral plate-like members (30) being the composite-material component made according to the production method of any one of Claims 1 to 11.

## Patentansprüche

1. Verfahren zur Herstellung einer Verbundmaterialkomponente (10, 20, 30, 54) eines Skischuhs (1) oder dergleichen (50), wobei die Komponente ein monolithischer Körper mit einer Schalenstruktur (10, 20, 30, 54) ist, die mindestens einen Verbundmaterialabschnitt (12, 22, 32, 56) und mindestens einen Elastomermaterialabschnitt (13a, 13b, 13c, 24, 34, 57) nebeneinander aufweist; wobei der mindestens eine Verbundmaterialabschnitt (12, 22, 32, 56) und der mindestens eine Elastomermaterialabschnitt (13a, 13b, 13c, 24, 34, 57) sich über die gesamte Dicke des monolithischen Körpers mit einer Schalenstruktur (10, 20, 30, 54) erstrecken und entlang des Randes und ohne Unterbrechung miteinander verbunden sind:
das genannte Verfahren zur Herstellung ist **dadurch gekennzeichnet, dass** es die Schritte umfasst:
- Anordnen/Auflegen mindestens eines ersten Blattes aus vorimprägniertem Gewebe (101) auf die Oberfläche einer Form (100), die die Form des herzustellenden monolithischen Körpers mit einer Schalenstruktur (10, 20, 30, 54) negativ kopiert, wobei der Bereich der Form (100), der dem herzustellenden Elastomermaterialabschnitt (13a, 13b, 13c, 24, 34) entspricht, unbedeckt bleibt;
- Anordnen/Auflegen eines ersten elastomeren thermoplastischen Materialfilms (102) auf der Oberfläche der Form (100) in dem Bereich der Form (100), der dem herzustellenden Elastomermaterialabschnitt (13a, 13b, 13c, 24, 34) entspricht, wobei der Rand des ersten elastomeren thermoplastischen Materialfilms (102) und das erste Blatt des vorimprägnierten Gewebes (101) zumindest teilweise überlappt werden;
- Anordnen/Auflegen eines Blattes aus nicht-vulkanisiertem Gummi (103) über den ersten elastomeren thermoplastischen Materialfilm (102) in dem Bereich der Form (100), der dem herzustellenden Elastomermaterialabschnitt (13a, 13b, 13c, 24, 34) entspricht;
- Anordnen/Auflegen eines zweiten elastomeren thermoplastischen Materialfilms (106) über das Blatt aus nicht-vulkanisiertem Gummi (103), wobei der Rand des zweiten elastomeren thermoplastischen Materialfilms (106) und des ersten Blatts aus vorimprägniertem Gewebe (101) und/oder des ersten thermoplastischen Elastomermaterialfilms (102) zumindest teilweise überlappt werden; und schließlich
- Entlüften der Form (100) und anschließendes Unterziehen der Form (100) und ihres gesamten Inhalts einem thermischen Backzyklus, der gleichzeitig die Vulkanisation des Blattes aus nicht-vulkanisiertem Gummi (103) und die Polymerisation/Retikulation und Härtung des wärmehärtenden Harzes des ersten Blattes aus vorimprägniertem Gewebe (101) bewirkt.

2. Verfahren zur Herstellung einer Verbundmaterialkomponente nach Anspruch 1, **dadurch gekennzeichnet, dass** das Blatt aus nicht-vulkanisiertem Gummi (103) derart geformt ist, dass es innerhalb des Umfangs der ersten thermoplastischen Elastomermaterialfilms (102) bleibt.

3. Verfahren zur Herstellung einer Verbundmaterialkomponente nach Anspruch 1 oder 2, **dadurch gekennzeichnet, dass** es außerdem den Schritt des Anordnens/Auflegens eines zweiten Blattes aus vorimprägniertem Gewebe (104) auf das erste Blatt aus vorimprägniertem Gewebe (101) und unter den zweite elastomeren thermoplastischen Materialfilms (106) umfasst, wobei der Bereich der Form (100), der dem herzustellenden Elastomermaterialabschnitt (13a, 13b, 13c, 24, 34) entspricht, unbedeckt bleibt.

4. Verfahren zur Herstellung einer Verbundmaterialkomponente nach Anspruch 3, **dadurch gekennzeichnet, dass** der Rand des zweiten Blatts aus vorimprägniertem Gewebe (104) den Rand des Blatts aus nicht-vulkanisiertem Gummi (103) zumindest teilweise überlappt.

5. Verfahren zur Herstellung einer Verbundmaterialkomponente nach einem der vorhergehenden Ansprüche, **dadurch gekennzeichnet, dass** es außerdem den Schritt umfasst, über das erste Blatt aus vorimprägniertem Gewebe (101) und unter den zweiten elastomeren thermoplastischen Materialfilm (106) mindestens ein Stück verstärkendes synthetisches Gewebe (105) zu legen, das sich ebenfalls über das Blatt aus nicht-vulkanisiertem Gummi (103) erstreckt.

6. Verfahren zur Herstellung einer Verbundmaterialkomponente nach Anspruch 5, **dadurch gekennzeichnet, dass** das Stück des verstärkenden synthetischen Gewebes (105) aus Aramidfasern und/oder Polyesterfasern hergestellt ist.

7. Verfahren zur Herstellung einer Verbundmaterialkomponente nach einem der vorhergehenden Ansprüche, **dadurch gekennzeichnet, dass** das erste Blatt aus vorimprägniertem Gewebe (101) aus einem oder mehreren Stücken synthetischen Gewebes besteht, die in geeigneter Weise miteinander überlappt und in ein vorzugsweise wärmehärtendes Epoxidharz eingebettet sind.

8. Verfahren zur Herstellung einer Verbundmaterialkomponente nach einem der vorhergehenden Ansprüche, **dadurch gekennzeichnet, dass** der erste (102) und/oder der zweite (106) elastomere thermoplastische Materialfilm aus einem thermoplastischen Polyurethanpolymer (TPU) hergestellt ist/sind.

9. Verfahren zur Herstellung einer Verbundmaterialkomponente nach Anspruch 8, **dadurch gekennzeichnet, dass** das thermoplastische Polyurethanpolymer (TPU) ein thermoplastisches Polyurethanharz auf Etherbasis ist.

10. Verfahren zur Herstellung einer Verbundmaterialkomponente nach einem der vorhergehenden Ansprüche, **dadurch gekennzeichnet, dass** das Blatt aus nicht-vulkanisiertem Gummi (103) aus einem nicht-retikulierten synthetischen Gummi besteht, dessen Vulkanisationstemperatur im Wesentlichen gleich der Polymerisations-/Retikulationstemperatur des wärmehärtenden Harzes des ersten Blattes aus vorimprägniertem Gewebe (101) ist, wobei die Dicke des Blattes aus nicht-vulkanisiertem Gummi (103) vorzugsweise zwischen 1 und 5 mm liegt.

11. Verfahren zur Herstellung einer Verbundmaterialkomponente nach Anspruch 10, **dadurch gekennzeichnet, dass** das Blatt aus nicht-vulkanisiertem Gummi (103) aus EPDM-Gummi hergestellt ist.

12. Skischuh (1), umfassend: eine im Wesentlichen starre Fußhülle (2), die im Wesentlichen schuhförmig ist, um den Fuß des Benutzers aufzunehmen; und eine im Wesentlichen starre Manschette (3), die derart geformt ist, dass sie den unteren Teil des Beins des Benutzers umschließt, und die schwenkbar mit der Fußhülle (2) verbunden ist, so dass sie um eine Drehachse (A) schwingen kann, die im Wesentlichen senkrecht zur Mittelebene des Skischuhs (M) verläuft;
der Skischuh (1) ist **dadurch gekennzeichnet, dass** die Fußhülle (2) und/oder die Manschette (3) mindestens eine Verbundmaterialkomponente (10, 20, 30) umfasst/umfassen, die gemäß dem Verfahren zur Herstellung nach einem der Ansprüche 1 bis 11 hergestellt ist.

13. Skischuh nach Anspruch 12, **dadurch gekennzeichnet, dass** die Fußhülle (2) eine erste, im Wesentlichen längliche, beckenförmige, starre Schale (10) umfasst, die so geformt/strukturiert ist, dass sie den Fuß des Benutzers aufnimmt und umschließt, wobei die erste starre Schale (10) die Verbundmaterialkomponente ist, die nach dem Verfahren zur Herstellung nach einem der Ansprüche 1 bis 11 hergestellt wurde.

14. Skischuh nach Anspruch 12 oder 13, **dadurch gekennzeichnet, dass** die Manschette (3) eine zweite, im Wesentlichen T-förmige, starre Schale (20) umfasst, die mittig gebogen ist, um den hinteren Teil des Beins des Benutzers ungefähr vom Knöchel bis zum oberen Ende der Wade zu bedecken, und die zusätzlich mit zwei länglichen seitlichen Laschen versehen ist, die sich auf gegenüberliegenden Seiten der Mittelebene des Skischuhs (M) nach vorne erstrecken, um das Bein des Benutzers von hinten ungefähr in Höhe der Wade zu umschließen; wobei die zweite starre Schale (20) die Verbundmaterialkomponente ist, die gemäß dem Verfahren zur Herstellung nach einem der Ansprüche 1 bis 11 hergestellt wird.

15. Skischuh nach Anspruch 12 oder 13, **dadurch gekennzeichnet, dass** die Manschette (3) umfasst: ein großes, längliches, zentrales, plattenförmiges Element (29), das in der Mitte C-förmig gebogen ist, um den hinteren Teil des Beins des Benutzers zu bedecken, ungefähr vom Knöchel bis zum oberen Ende der Wade, und das direkt schwenkbar mit der Fußhülle (2) verbunden ist; und zwei seitliche plattenähnliche Elemente (30), die diskret und von dem zentralen plattenähnlichen Element (29) getrennt sind und stabil an dem zentralen plattenähnlichen Element (29) auf gegenüberliegenden Seiten desselben und der Mittelebene des Skischuhs (M) befestigt sind, so dass sie in freitragender Weise von dem zentralen plattenähnlichen Element (29) vorstehen und das Bein des Benutzers von hinten ungefähr auf der Höhe der Wade umfassen, wobei die seitlichen plattenähnlichen Elemente (30) die Verbundmaterialkomponente sind, die gemäß dem Verfahren zur Herstellung nach einem der Ansprüche 1 bis 11 hergestellt werden.

## Revendications

1. Procédé de production d'un composant en matériau composite (10, 20, 30, 34) d'une chaussure de ski (1) ou similaire (50) ; ledit composant étant un corps monolithique doté d'une structure de coque (10, 20, 30, 54), qui a au moins une portion en matériau composite (12, 22, 32, 56) et au moins une portion en matériau élastomérique (13a, 13b, 13c, 24, 34, 57) adjacentes l'une à l'autre ; ladite au moins une portion en matériau composite (12, 22, 32, 56) et ladite au moins une portion en matériau élastomérique (13a, 13b, 13c, 24, 34, 57) s'étendant sur toute l'épaisseur du corps monolithique doté d'une structure de coque (10, 20, 30, 54), et étant jointes l'une à l'autre le long du bord et sans interruption :
ledit procédé de production étant **caractérisé en ce qu'**il comprend les étapes de :
- placement/pose d'au moins une première feuille de tissu préimprégné (101) sur la surface d'un moule (100) qui copie en négatif la forme du corps monolithique doté d'une structure de coque (10, 20, 30, 54) à réaliser, tout en laissant découverte la zone du moule (100) correspondant à la portion en matériau élastomérique (13a, 13b, 13c, 24, 34) à réaliser ;
- placement/pose d'un premier film en matériau thermoplastique élastomérique (102) sur la surface du moule (100), dans la zone du moule (100) correspondant à la portion en matériau élastomérique (13a, 13b, 13c, 24, 34) à réaliser, chevauchant au moins partiellement le bord dudit premier film en matériau thermoplastique élastomérique (102) et ladite première feuille de tissu préimprégné (101) ;
- placement/pose d'une feuille de caoutchouc non vulcanisé (103) sur ledit premier film en matériau thermoplastique élastomérique (102), dans la zone du moule (100) correspondant à la portion en matériau élastomérique (13a, 13b, 13c, 24, 34) à réaliser ;
- placement/pose d'un second film en matériau thermoplastique élastomérique (106) sur ladite feuille de caoutchouc non vulcanisé (103), chevauchant au moins partiellement le bord dudit second film en matériau thermoplastique élastomérique (106) et ladite première feuille de tissu préimprégné (101) et/ou ledit premier film en matériau élastomère thermoplastique (102) ; et enfin
- extraction de l'air du moule (100) puis soumission du moule (100) et de la totalité de son contenu à un cycle de cuisson thermique, qui provoque simultanément la vulcanisation de la feuille de caoutchouc non vulcanisé (103) et la polymérisation/réticulation et le durcissement de la résine thermodurcissable de ladite première feuille de tissu préimprégné (101).

2. Procédé de production d'un composant en matériau composite selon la revendication 1, **caractérisé en ce que** ladite feuille de caoutchouc non vulcanisé (103) est formée de façon à rester au sein du périmètre dudit premier matériau élastomère thermoplastique (102).

3. Procédé de production d'un composant en matériau composite selon la revendication 1 ou 2, **caractérisé en ce qu'**il comprend en outre l'étape de placement/pose, sur ladite première feuille de tissu préimprégné (101) et sous ledit second film en matériau thermoplastique élastomérique (106), d'une seconde feuille de tissu préimprégné (104), tout en laissant découverte la zone du moule (100) correspondant à la portion en matériau élastomérique (13a, 13b, 24, 34) à réaliser.

4. Procédé de production d'un composant en matériau composite selon la revendication 3, **caractérisé en ce que** le bord de ladite seconde feuille de tissu préimprégné (104) chevauche au moins partiellement le bord de ladite feuille de caoutchouc non vulcanisé (103).

5. Procédé de production d'un composant en matériau composite selon l'une quelconque des revendications précédentes, **caractérisé en ce qu'**il comprend en outre l'étape de placement/pose, sur ladite première feuille de tissu préimprégné (101) et sous ledit second film en matériau thermoplastique élastomérique (106), d'au moins une pièce de tissu synthétique de renforcement (105) qui s'étend également sur la feuille de caoutchouc non vulcanisé (103).

6. Procédé de production d'un composant en matériau composite selon la revendication 5, **caractérisé en ce que** ladite pièce de tissu synthétique de renforcement (105) est réalisée en fibres d'aramide et/ou en fibres de polyester.

7. Procédé de production d'un composant en matériau composite selon l'une quelconque des revendications précédentes, **caractérisé en ce que** ladite première feuille de tissu préimprégné (101) est réalisée en une ou plusieurs pièces de tissu synthétique se chevauchant de manière appropriée les unes les autres et incorporées dans une résine thermodurcissable de préférence époxy.

8. Procédé de production d'un composant en matériau composite selon l'une quelconque des revendications précédentes, **caractérisé en ce que** ledit premier (102) et/ou ledit second (106) film en matériau thermoplastique élastomérique sont réalisés en un polymère de polyuréthane thermoplastique (TPU).

9. Procédé de production d'un composant en matériau composite selon la revendication 8, **caractérisé en ce que** ledit polymère de polyuréthane thermoplastique (TPU) est une résine de polyuréthane thermoplastique à base d'éther.

10. Procédé de production d'un composant en matériau composite selon l'une quelconque des revendications précédentes, **caractérisé en ce que** ladite feuille de caoutchouc non vulcanisé (103) est réalisée en un caoutchouc synthétique non réticulé ayant une température de vulcanisation sensiblement égale à la température de polymérisation/réticulation de la résine thermodurcissable de ladite première feuille de tissu préimprégné (101) ; de préférence l'épaisseur de ladite feuille de caoutchouc non vulcanisé (103) allant de 1 à 5 mm.

11. Procédé de production d'un composant en matériau composite selon la revendication 10, **caractérisé en ce que** ladite feuille de caoutchouc non vulcanisé (103) est réalisée en caoutchouc EPDM.

12. Chaussure de ski (1) comprenant : une enveloppe de pied (2) sensiblement rigide qui a sensiblement la forme des orteils de façon à accueillir le pied de l'utilisateur ; et un revers (3) sensiblement rigide qui est formé de façon à renfermer la partie inférieure de la jambe de l'utilisateur, et est joint en pivotement à l'enveloppe de pied (2) de façon à être capable d'osciller autour d'un axe de rotation (A) sensiblement perpendiculaire au plan médian de la chaussure de ski (M) ;
la chaussure de ski (1) étant **caractérisée en ce que** l'enveloppe de pied (2) et/ou le revers (3) comprend/comprennent au moins un composant en matériau composite (10, 20, 30) réalisé selon le procédé de production de l'une quelconque des revendications 1 à 11.

13. Chaussure de ski selon la revendication 12, **caractérisée en ce que** l'enveloppe de pied (2) comprend une première coque rigide (10) en forme de cuvette sensiblement oblongue qui est formée/structurée de façon à accueillir et renfermer le pied de l'utilisateur ; ladite première coque rigide (10) étant le composant en matériau composite réalisé selon le procédé de production de l'une quelconque des revendications 1 à 11.

14. Chaussure de ski selon la revendication 12 ou 13, **caractérisée en ce que** le revers (3) comprend une seconde coque rigide (20) sensiblement en forme de T qui est courbée en C au centre de façon à couvrir la partie arrière de la jambe de l'utilisateur, approximativement depuis la cheville jusqu'en haut du mollet, et est en outre pourvue de deux rabats latéraux oblongs s'étendant vers l'avant sur des côtés opposés du plan médian de la chaussure de ski (M), de façon à encercler la jambe de l'utilisateur par l'arrière approximativement à la hauteur du mollet ; ladite seconde coque rigide (20) étant le composant en matériau composite réalisé selon le procédé de production de l'une quelconque des revendications 1 à 11.

15. Chaussure de ski selon la revendication 12 ou 13, **caractérisée en ce que** le revers (3) comprend : un organe de type plaque centrale (29) qui est courbé en C au centre de façon à couvrir la partie arrière de la jambe de l'utilisateur, approximativement depuis la cheville jusqu'en haut du mollet, et est directement joint en pivotement à l'enveloppe de pied (2), et deux organes de type plaque latérale (30) qui sont discrets et séparés de l'organe de type plaque centrale (29) et sont fixés de façon stable audit organe de type plaque centrale (29) sur des côtés opposés de celui-ci et du plan médian de la chaussure de ski (M), de façon à faire saillie en porte-à-faux depuis l'organe de type plaque centrale (29) et encercler la jambe de l'utilisateur depuis l'arrière approximativement à la hauteur du mollet ; lesdits organes de type plaque latérale (30) étant le composant en matériau composite réalisé selon le procédé de production de l'une quelconque des revendications 1 à 11.
